# EUROPEAN PATENT APPLICATION

(11) **EP 4 523 670 A2**
(43) Date of publication of application: **19.03.2025**
(21) Application number: 23727189.5
(22) Date of filing: 24.03.2023
(51) Int. Cl.: A61H 1/02, B25J 9/00, B25J 9/12, H01F 7/00, A63B 21/00

(54) **SLIDING APPARATUS AND MOTION ASSIST APPARATUS COMPRISING SAME**

(30) Priority: 12.05.2022 KR 20220058546; 26.09.2022 KR 20220121761; 08.11.2022 KR 20220147903; 16.12.2022 KR 20220176993
(71) Applicant: Samsung Electronics Co., Ltd., Suwon-Si, Gyeonggi-do 16677 (KR)
(72) Inventor: BAE, Kuemjong, Suwon-si, Gyeonggi-do 16677 (KR); SUL, Namki, Suwon-si, Gyeonggi-do 16677 (KR); CHOI, Wonjun, Suwon-si, Gyeonggi-do 16677 (KR)
(74) Representative: Gulde & Partner
(86) International application number: PCT/KR2023/003966
(87) International publication number: WO 2023/219260

(57) **Abstract**

A wearable motion assisting device (e.g., exercise assisting device) may include an auxiliary arm, which is wearable around a femoral region of a user, including a sliding device including a base frame, a slider pad of which at least a portion of is configured to slide in a predetermined direction with respect to the base frame and return to a predetermined position with respect to the base frame via a magnetic force, and a mounting member configured to connect the base frame and the slider pad, an actuator connected to the auxiliary arm and configured to control the auxiliary arm to be driven, a main belt configured to enclose a waist of the user, and a main frame connected to the main belt and provided with the actuator mounted/supported thereon.

## Description

### BACKGROUND

### 1. Field

Certain example embodiments relate to a sliding device and/or a motion assisting device including the same.

### 2. Description of Related Art

In a rapidly aging society, a growing number of people are complaining of joint-related inconvenience and pain. Accordingly, there is a heightened interest in an assisting device for assisting the elderly or other patients having joint problems or who desire exercise.

There is a need for an assisting device for improving the wearability and/or usability of wearable assisting devices and/or walking assisting devices that may assist pedestrians/persons in walking.

The above description is information the inventor(s) acquired during the course of conceiving the present disclosure, or already possessed at the time, and was not necessarily publicly known before the present application was filed.

### SUMMARY

An example embodiment may provide a sliding device of which a component (e.g., a slider pad to be described later) for touching a femoral region of a user may be aligned to be in a predetermined position.

An example embodiment may reduce noise and/or friction caused by the component (e.g., slider pad) touching the femoral region of the user while it moves to an alignment position.

An example embodiment may use at least a magnetic force to induce alignment of the component (e.g., slider pad) touching the femoral region of the user.

According to an example embodiment, a sliding device may include a base frame, a slider pad of which at least a portion is configured to slide in a predetermined direction with respect to the base frame, and a mounting member configured to connect, directly or indirectly, the base frame and the slider pad, wherein the slider pad may include a core body providing a fixed magnet and connected, directly or indirectly, and fixed to the mounting member and a main housing providing a pairing magnet to be attracted by the fixed magnet and configured to accommodate the core body therein, and the main housing may be configured to slide with respect to the core body.

The core body may include at least one roller configured to slide the main housing.

The main housing may include a plurality of sliding rails configured to slide with respect to the core body.

The core body may include a sliding projection touching the sliding rails and configured to slide.

The sliding projection may include a first projection protruding from one side of the core body and a second projection protruding from another side of the core body, and the sliding rails may include a first sliding rail touching the first projection and a second sliding rail touching the second projection.

The first sliding rail may include two rails, and the second sliding rail may include four rails.

A pair of fixed magnets and a pair of pairing magnets may be provided, and each magnet of the pair of fixed magnets and the pair of pairing magnets may be arranged symmetrically with respect to a central portion of the slider pad.

The fixed magnet may be configured to apply, to the pairing magnet, a magnetic force in a direction to attract the pairing magnet, and the main housing may be configured to return to a predetermined alignment position with respect to the core body via at least a magnetic force.

A magnitude of the magnetic force with which the fixed magnet attracts the pairing magnet may be maximized at the alignment position.

The main housing may include a through hole through which a portion of the core body may be configured to penetrate, and the portion of the core body may be connected, directly or indirectly, to the mounting member at least by penetrating the through hole.

The sliding device may further include a rubber pad disposed on, directly or indirectly, a surface of the core body facing an inner wall of the main housing.

The fixed magnet and the pairing magnet may be identical in size and shape.

According to an example embodiment, a motion assisting device may include an auxiliary arm, which is wearable around a femoral region of a user, including a sliding device including a base frame, a slider pad of which at least a portion is configured to slide in a predetermined direction with respect to the base frame and return to a predetermined position with respect to the base frame via at least a magnetic force, and a mounting member configured to connect, directly or indirectly, the base frame and the slider pad, an actuator connected, directly or indirectly, to the auxiliary arm and configured to control the auxiliary arm to be driven, a main belt configured to enclose a waist of the user, and a main frame connected, directly or indirectly, to the main belt and provided with the actuator mounted, directly or indirectly, thereon.

The slider pad may be configured to return to a central portion of the femoral region of the user via at least the sliding device.

According to an example embodiment, a sliding device may control a component (e.g., a slider pad to be described later) touching a femoral region of a user to be aligned to be in a predetermined position.

According to an example embodiment, a motion assisting device including a sliding device may reduce noise and friction caused when a component (e.g., a slider pad to be described later) touching a femoral region of a user moves to an alignment position.

According to an example embodiment, a sliding device may use a magnetic force to induce alignment of component (e.g., a slider pad to be described later) touching a femoral region of a user.

### BRIEF DESCRIPTION OF THE DRAWINGS

The above and other aspects, features, and advantages of certain embodiments of the present disclosure will be more apparent from the following detailed description, taken in conjunction with the accompanying drawings, in which:
FIG. 1 is a diagram illustrating a motion assisting device including a sliding device according to an example embodiment;
FIG. 2 is a schematic diagram illustrating a sliding device according to an example embodiment;
FIG. 3 is an exploded perspective view of a sliding device according to an example embodiment;
FIG. 4 is a cross-sectional view of a sliding device according to an example embodiment;
FIGS. 5A, 5B, and 5C are cross-sectional views showing an operating principle of a sliding device according to an example embodiment; and
FIG. 6 is an exploded perspective view of a sliding device according to an example embodiment.
FIG. 7 is a cross-sectional view of a sliding device according to an example embodiment.

### DETAILED DESCRIPTION

Hereinafter, embodiments are described in detail with reference to the accompanying drawings. The following description describes one of several aspects of the embodiments, and the following description forms part of the detailed description of the embodiments. In the description of an embodiment, any detailed description of a well-known function or configuration is not included to clearly convey the gist of the present disclosure.

However, various alterations and modifications may be made to the embodiments. Thus, the embodiments are not meant to be limited by the descriptions of the present disclosure. The embodiments should be understood to include all changes, equivalents, and replacements within the idea and the technical scope of the disclosure.

The singular forms "a," "an," and "the" are intended to include the plural forms as well, unless the context clearly indicates otherwise. It will be further understood that the terms "comprises/comprising" and/or "includes/including" when used herein, specify the presence of stated features, integers, steps, operations, elements, and/or components, but do not preclude the presence or addition of one or more of other features, integers, steps, operations, elements, components and/or groups thereof.

Unless otherwise defined, all terms including technical and scientific terms used herein have the same meaning as commonly understood by one of ordinary skill in the art to which the embodiments belong. Terms defined in dictionaries generally used should be construed as having meanings matching contextual meanings in the related art and are not to be construed as having an ideal or excessively formal meaning unless otherwise defined herein.

When describing the embodiments with reference to the accompanying drawings, like reference numerals refer to like constituent elements and any repeated description related thereto will be omitted. In the description of an embodiment, any detailed description of well-known related structures or functions will be omitted when it is deemed that such description will make the present disclosure ambiguous and open to different interpretations.

Also, in the description of the components, terms such as first, second, A, B, (a), (b) or the like may be used herein when describing components of the embodiments. These terms are used only for the purpose of discriminating one component from another component, and the nature, the sequences, or the orders of the components are not limited by the terms. It is to be understood that if a component is described as being "connected," "coupled" or "joined" to another component, the former may be directly "connected," "coupled," and "joined" to the latter or "connected", "coupled", and "joined" to the latter via at least another component(s).

Components included in an embodiment and components having a common function are described using the same names in other embodiments. Unless stated otherwise, the description of an embodiment may be applicable to other embodiments, and any repeated description related thereto will be omitted.

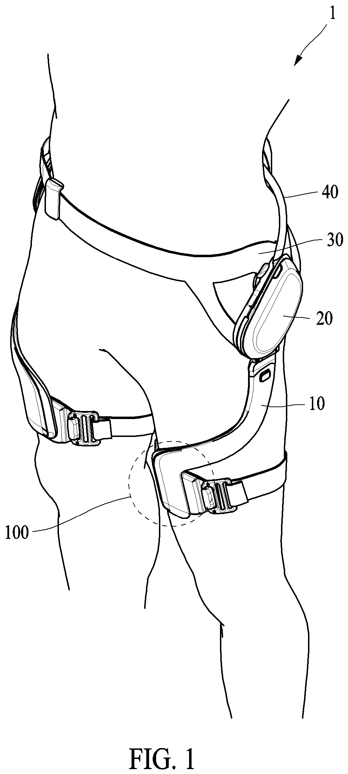

FIG. 1 is a diagram illustrating a motion assisting device including a sliding device according to an embodiment.

According to an embodiment, a motion assisting device 1 including a sliding device may be worn by a user and assist a motion of the user. The user may be a human, an animal, or a robot, but is not limited thereto. The motion assisting device 1 may assist a motion of some upper or lower body joints of the user. For example, the motion assisting device 1 may assist the motion of the lower body of the user by assisting at least one of a hip j oint, a knee j oint, and an ankle joint of the user. For example, the motion assisting device 1 may assist the motion of the upper body of the user by assisting at least one of a shoulder j oint, an elbow j oint, and a wrist joint of the user. The motion assisting device 1 may assist the user in walking by assisting the motion of some lower body joints of the user.

Referring to FIG. 1, the motion assisting device 1 including a sliding device 100 may include an auxiliary arm 10, an actuator 20, a main belt 30, and a main frame 40.

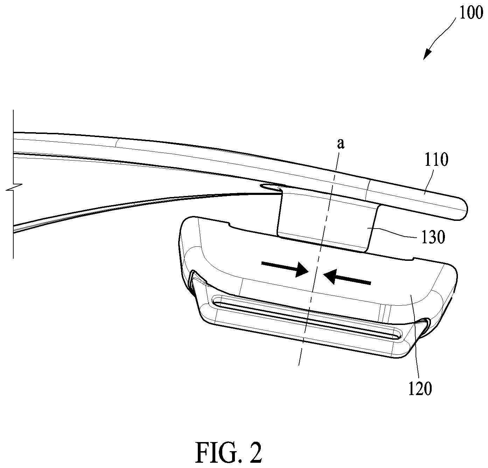

The auxiliary arm 10 may be worn around a femoral region of the user. A pair of auxiliary arms 10 may be provided. The auxiliary arm 10 may be worn around the femoral region of the user and assist the motion of the lower body of the user. The auxiliary arm 10 may assist a motion, such as walking or running, by transmitting power to the femoral region of the user. The auxiliary arm 10 may include a femoral belt that encloses the femoral region of the user. The sliding device 100 may be provided at a connecting portion that connects the auxiliary arm 10 and the femoral belt. The sliding device 100 may be provided at the connecting portion that connects the femoral belt to the auxiliary arm 10 and may control the femoral belt to appropriately enclose the femoral region of the user. The sliding device 100 connected to the auxiliary arm 10 is described in detail later with reference to FIGS. 2 through 5C.

The actuator 20 may be connected to the auxiliary arm 10. The actuator 20 may transmit power to the auxiliary arm 10 such that the auxiliary arm 10 may be driven. The actuator 20 may include software that controls driving of the auxiliary arm 10. When the user is wearing the motion assisting device 1, the actuator 20 may be disposed on, directly or indirectly, a side of a pelvis of the user. A pair of actuators 20 may be provided to correspond to the pair of arms 10, respectively.

The main belt 30 may enclose a waist of the user. When the user is wearing the motion assisting device 1, the main belt 30 may support the waist of the user. When the user is wearing the motion assisting device 1, the main belt 30 may prevent or reduce the motion assisting device 1 from being separated downward due to gravity. The main belt 30 may be connected to the auxiliary arm 10 and the actuator 20. The main belt 30 may be connected to the main frame 40.

The main frame 40 may be connected to the main belt 30 and accommodate the waist of the user therein. The main frame 40 is a rigid body and may form a structural skeleton of the motion assisting device. The main frame 40 may include an actuator mounting portion (not shown) on which the actuator 20 may be mounted/supported, directly or indirectly,. The main frame 40 may be connected to the auxiliary arm 10. The main frame 40 may be connected to the pair of auxiliary arms 10 and rotatably support the auxiliary arm 10. The actuator 20 may be disposed at both ends of the main frame 40.

FIG. 2 is a schematic diagram illustrating a sliding device according to an embodiment.

According to an embodiment, the sliding device 100 may be connected to an auxiliary arm of a motion assisting device. The sliding device 100 may connect a femoral belt (not shown) worn on a femoral region of a user and the auxiliary arm. The sliding device 100 may control a position of the femoral belt such that the femoral belt may be optimally worn around the femoral region of the user.

Referring to FIG. 2, the sliding device 100 may include a base frame 110, a slider pad 120, and a mount/mounting member 130.

The base frame 110 may be a portion of the auxiliary arm (not shown) of the motion assisting device. The base frame 110 may form a rigid body with the auxiliary arm. The base frame 110 may form one end of the auxiliary arm. The base frame 110 may support the mount/mounting member 130 and the slider pad 120 while fixed to the auxiliary arm.

The slider pad 120 and the femoral belt may be connected. The slider pad 120 may include connecting holes formed at both ends allowing the femoral belt to be connected to the slider pad. At least a portion of the slider pad 120 may move relative to the base frame 110. At least the portion of the slider pad 120 may move in a predetermined direction (e.g., directions of arrows illustrated in FIG. 2) relative to the base frame 110. The slider pad 120 may move about a reference axis a that penetrates a center of the mount/mounting member 130. The slider pad 120, which moves by sliding, may slide, for example, in a direction to return to the reference axis a. When no other external force is being applied, such as force of a gait of a user, a central portion of the slider pad 120 may be aligned with the reference axis and stay still. The slider pad 120 may move in one degree of freedom with respect to the base frame 110. At least the portion of the slider pad 120 may move by making a sliding motion.

The mount/mounting member 130 may connect the base frame 110 and the slider pad 120. The mounting member 130 may be fixed to the base frame 110. The slider pad 120 may move relative to the base frame 110 and the fixed mounting member 130. A portion of one end of the mounting member 130 may be inserted into the slider pad 120. The mounting member 130 may be connected to an inner portion (e.g., a core body to be described later) of the slider pad 120. The mounting member 130 may be fixed to the inner portion (e.g., the core body to be described later) of the slider pad 120. Desirably, an exterior of the mounting member 130 may have a cylindrical shape. When the exterior of the mounting member 130 is cylindrical, the slider pad 120 may move in one degree of freedom about a central axis of the cylindrical mounting member 130 using the central axis as the reference axis a. The slider pad 120 may slide such that the central portion of the slider pad 120 is aligned with the reference axis a.

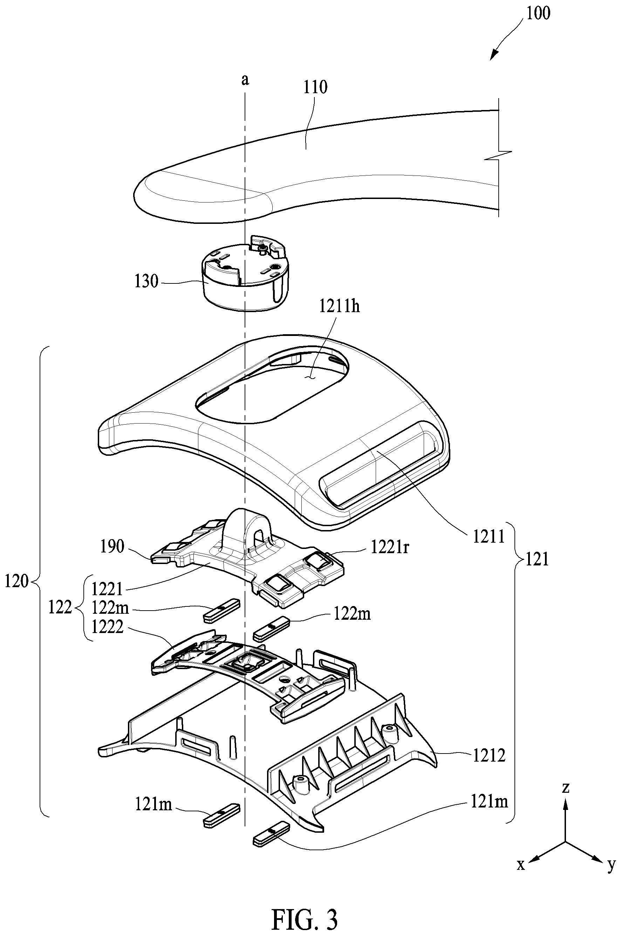

FIG. 3 is an exploded perspective view of a sliding device according to an embodiment.

Referring to FIG. 3, the sliding device 100 may include the base frame 110, the slider pad 120, the mounting member 130, and a rubber pad 190.

The base frame 110 may be a portion of the auxiliary arm (not shown) of the motion assisting device. The base frame 110 may form a rigid body with the auxiliary arm. The base frame 110 may form one end of the auxiliary arm. The base frame 110 may support the mounting member 130 and the slider pad 120 while fixed to the auxiliary arm.

The slider pad 120 may include a main housing 121 and a core body 122. The main housing 121 and the core body 122 form the slider pad 120 by being coupled, directly or indirectly, to each other. The main housing 121 may be movably coupled to the core body 122.

The main housing 121 may include an inner space to accommodate the core body 122. The main housing 121 may form an exterior of the slider pad 120. The main housing 121 may move relative to the core body 122. The main housing 121 may move in a predetermined direction (e.g., an x-axis direction of FIG. 3) with respect to the core body 122. The main housing 121 may slide in one degree of freedom with respect to the core body 122. The main housing 121 may move relative to the base frame 110 and the mounting member 130 by sliding with respect to the core body 122. The main housing 121 may slide about the reference axis a that penetrates a center of the mounting member 130. The main housing 121 may slide to return in a direction in which a central portion of the main housing 121 is aligned with the reference axis a.

The main housing 121 may include a first main housing part 1211, a second main housing part 1212, and a pairing magnet 121m.

The first main housing part 1211 may be coupled to the second main housing part 1212. The first main housing part 1211 may include a through hole 1211h through which the mount/mounting member 130, the core body 122, or at least some of them may penetrate. The core body 122 and the mounting member 130 are connected and fixed through the through hole 1211h. Desirably, an exterior of the first main housing part 1211 may have a circular arc shape.

The second main housing part 1212 may be coupled to the first main housing part 1211. Desirably, an exterior of the second main housing part 1212 may have a circular arc shape.

The pairing magnet 121m may be fixed to the main housing 121. The pairing magnet 121m may interact with a fixed magnet 122m to be described later by exchanging a magnetic force. The pairing magnet 121m may be mounted on, directly or indirectly, an outer circumferential surface of the second main housing part 1212. For example, a pair of pairing magnets 121m may be provided. While fixed to the main housing 121, the pairing magnet 121m may move together with the main housing as the main housing 121 slides.

The core body 122 may be accommoda"ed i' the main housing 121. The core body 122 may be connected and fixed to the mounting member 130. A portion of the core body 122 may penetrate the through hole 1211h of the main housing.

The core body 122 may include a first core body part 1221, a second core body part 1222, and the fixed magnet 122m.

The first core body part 1221 may be connected and fixed to the mount/mounting member 130. The first core body part 1221 may include a mounting member connecting part that is formed to be connected to the mounting member 130. The first core body part 1221 may include a roller 1221r to slide the main housing 121. A plurality of rollers 1221r may be provided. The roller 1221r may have a wheel shape and slide the main housing 121 in the predetermined direction (the x-axis direction of FIG. 3) with respect to the core body. Desirably, an exterior of the first core body part 1221 may have a circular arc shape.

The second core body part 1222 may be coupled to the first core body part 1221. The second core body part 1222 may include a roller hole through which the roller 1221r of the first core body part 1221 may penetrate. Desirably, an exterior of the second core body part 1222 may have a circular arc shape.

The fixed magnet 122m may be fixed to the core body 122. The fixed magnet 122m may interact and exchange the magnetic force with the pairing magnet 121m. Since the core body 122 is connected and fixed to the base frame 110 and the mounting member 130, the fixed magnet 122m may also be fixed and stay still. The fixed magnet 122m may be mounted on, directly or indirectly, the second core body part 1222. A pair of fixed magnets 122m may be provided. A central portion of the pair of fixed magnets 122m may be formed to be aligned with the above-mentioned reference axis a. The pair of fixed magnets 122m may be arranged symmetrically with respect to the reference axis a. The fixed magnet 122m and the pairing magnet 121m may be identical in shape and size. The fixed magnet 122m and the pairing magnet 121m may be identical in magnitude of magnetic force. The fixed magnet 122m and the pairing magnet 121m may apply, to each other, a magnetic force in a direction to attract each other.

The mount/mounting member 130 may connect the base frame 110 and the slider pad 120. The mounting member 130 may be fixed to the base frame 110. A portion of one end of the mounting member 130 may be inserted into the slider pad 120 through the through hole 1211h. The mounting member 130 may be connected to the first core body part 1221. The mounting member 130 may be fixed to the first core body part 1221. Desirably, an exterior of the mounting member 130 may have a cylindrical shape. When the exterior of the mounting member 130 is cylindrical, the main housing 121 may move in one degree of freedom about a central axis of the cylindrical mounting member 130 using the central axis as the reference axis a.

The rubber pad 190 may be disposed on, directly or indirectly, a surface of the core body 122 facing an inner wall of the main housing 121. The rubber pad 190 may be provided on a front surface and/or a rear surface of the core body 122. For example, the rubber pad 190 may be disposed on a surface of the core body 122 facing a +x direction and/or a surface of the core body 122 facing a -x direction. The rubber pad 190 may be disposed on the first core body part 1221. The rubber pad 190 may prevent or reduce the core body 122 from directly contacting the main housing 121 and absorb an impact. The rubber pad 190 may reduce dust emissions. A plurality of rubber pads 190 may be provided. The rubber pad 190 is illustrated as being provided in a front-rear direction of the core body 122, however, positions at which the rubber pad 190 is disposed or a number of rubber pads 190 are not limited thereto. For example, the rubber pad 190 may also be provided on an upper surface and/or a lower surface of the core body 122. The rubber pad 190 is illustrated as approximately having a cuboid shape, however, embodiments are not limited thereto. The rubber pad 190 may be replaced with a buffer, such as a sponge, or a spring-shaped structure.

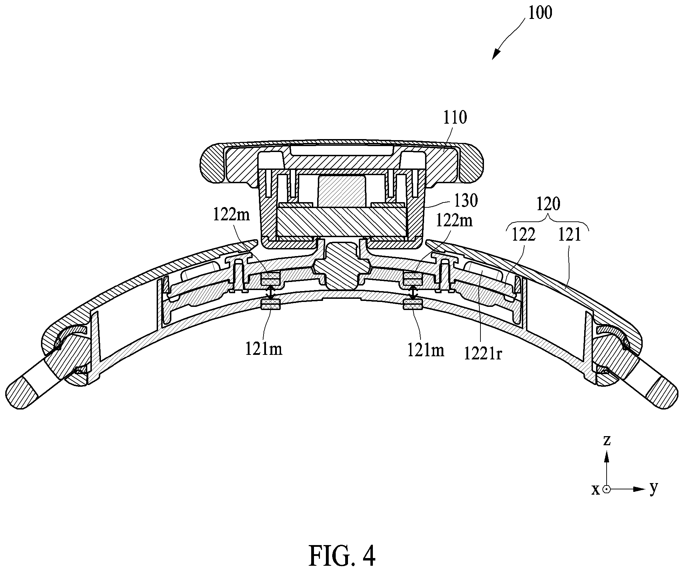

FIG. 4 is a cross-sectional view of a sliding device according to an embodiment.

Referring to FIG. 4, the sliding device 100 may include the base frame 110, the slider pad 120, and the mounting member 130.

The slider pad 120 may include the main housing 121 and the core body 122. The fixed magnet 122m of the core body 122 and the pairing magnet 121m of the main housing 121 may apply, to each other, an attraction force that attracts each other. As the roller 1221r of the core body 122 touches an inner circumferential surface of the main housing 121, the main housing 121 may slide in one degree of freedom in a predetermined direction (e.g., an x-axis direction of FIG. 4) with respect to the core body 122. The base frame 110, the mounting member 130, and the core body 122 may be connected and fixed to each other.

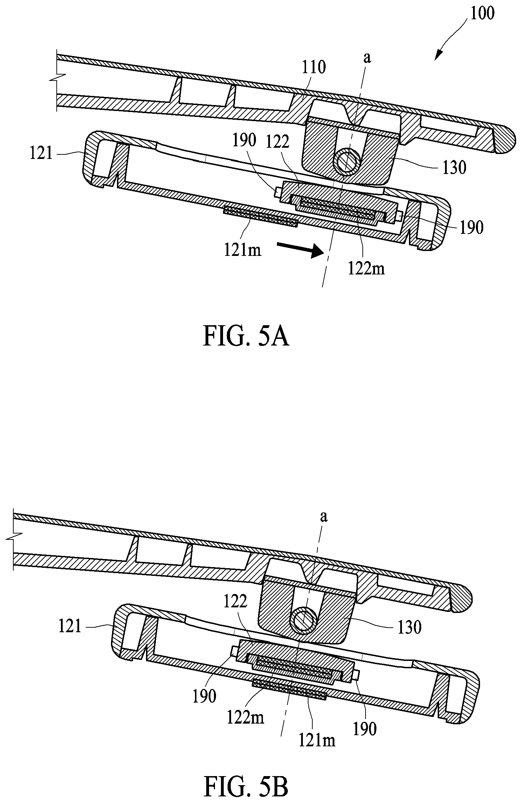

FIGS. 5A through 5C are cross-sectional views showing an operating principle of a sliding device according to an embodiment.

Referring to FIGS. 5A through 5C, the sliding device 100 may include the base frame 110, the mounting member 130, the main housing 121, and the core body 122.

The main housing 121 may slide in a predetermined direction with respect to the core body 122. The core body 122 may be fixed to the mounting member 130, and the fixed magnet 122m mounted on, directly or indirectly, the core body 122 may not move. Accordingly, a center of a pair of fixed magnets 122m may be fixed while aligned with the above-mentioned reference axis a. The fixed magnet 122m of the core body and the pairing magnet 121m of the main housing 121 may apply a magnetic force in a direction to attract each other. The pairing magnet 121m of the main housing 121 may depend on the main housing 121 that slides and slide together with the main housing 121. An attraction force between the pairing magnet 121m of the main housing 121 and the fixed magnet 122m of the core body 122 may be maximized or large at a position at which the pairing magnet 121m is aligned with the reference axis a while sliding. In other words, when both of the fixed magnet 122m of the core body and the pairing magnet 121m of the main housing 121 are aligned with the reference axis a, a magnetic force applied between the fixed magnet 122m and the pairing magnet 121m may be maximized or large.

Referring to FIG. 5A, when the pairing magnet 121m of the main housing 121 deviates in one direction from the alignment with the reference axis a, the pairing magnet 121m may move toward the fixed magnet 122m due to the attraction force between the pairing magnet 121m and the fixed magnet 122m of the core body 122, and thus, the main housing 121 may slide in a direction (e.g., a direction of an arrow illustrated in FIG. 5A) aligned with the reference axis a. In other words, when the main housing 121 deviates in one direction from the alignment with the base frame 110 and the mounting member 130, the main housing 121 may return to an alignment position due to an interaction between the pairing magnet 121m and the fixed magnet 122m. This alignment position may be in a centering alignment state in which a central portion of the main housing 121 is aligned with the reference axis a that penetrates a central portion of the mounting member 130.

Referring to FIG. 5B, when the central portion of the main housing 121 is aligned with the reference axis a, the pairing magnet 121m of the main housing 121 and the fixed magnet 122m of the core body 122 may be in an aligned state. In this state, a magnitude of the magnetic force with which the fixed magnet 122m and the pairing magnet 121m attract each other may be maximized or large, and the aligned state may be maintained even when a predetermined level of external force (e.g., a gait of a user or an external impact) is applied. That is, the mounting member 130, the core body 122, and the main housing 121 may be centered with respect to the reference axis a.

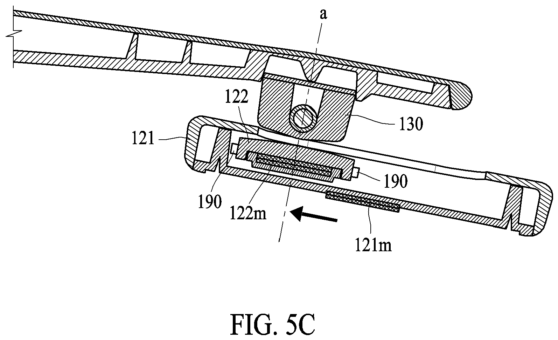

Referring to FIG. 5C, when the pairing magnet 121m of the main housing 121 deviates in another direction from the alignment with the reference axis a, the pairing magnet 121m may move toward the fixed magnet 122m due to the attraction force between at least the pairing magnet 121m and the fixed magnet 122m of the core body 122, and thus, the main housing 121 may slide in a direction (e.g., a direction of an arrow illustrated in FIG. 5C) aligned with the reference axis a. In other words, when the main housing 121 deviates in another direction from the alignment with the base frame 110 and the mounting member 130, the main housing 121 may return to the alignment position due to the interaction between the pairing magnet 121m and the fixed magnet 122m. This alignment position may be in the centering alignment state in which the central portion of the main housing 121 is aligned with the reference axis a that penetrates the central portion of the mounting member 130.

Accordingly, returning (e.g., the above-mentioned centering) a component (e.g., the above-mentioned slider pad) to a predetermined position using a magnet and a magnetic force accompanying the magnet may reduce noise created by the component as it moves or dust generated by friction, and thus, a user may have an improved user experience.

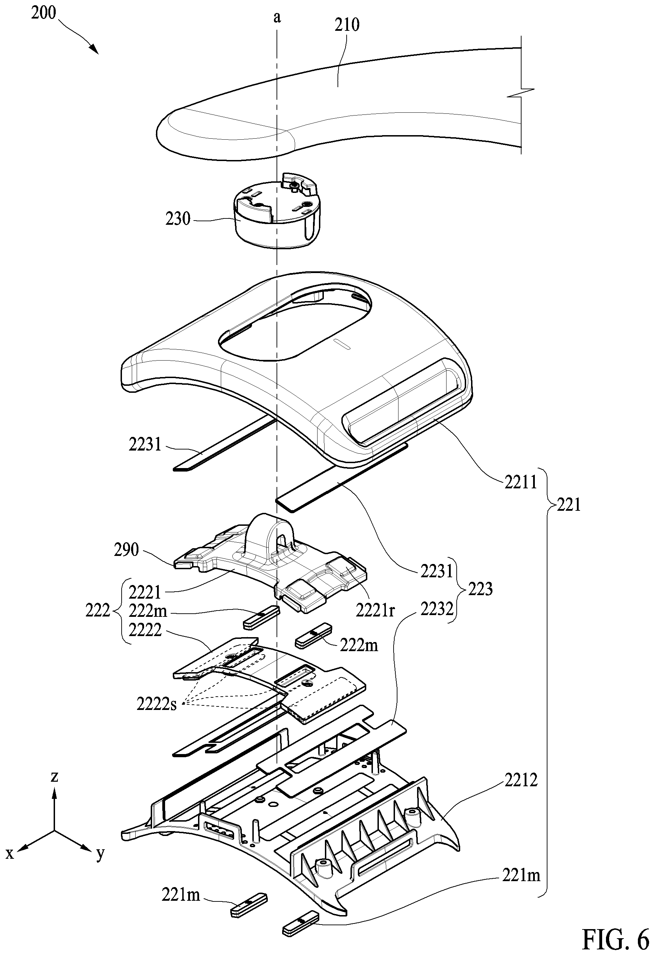

FIG. 6 is an exploded perspective view of a sliding device according to an embodiment.

Referring to FIG. 6, the sliding device may include a base frame 210, a slider pad 220, a mount/mounting member 230, and a rubber pad 290.

The base frame 210 may be a portion of an auxiliary arm (not shown) of a motion assisting device. The base frame 210 may form a rigid body with the auxiliary arm. The base frame 210 may form one end of the auxiliary arm. The base frame 210 may support the mount/mounting member 230 and the slider pad 220 while fixed to the auxiliary arm.

The slider pad 220 may include a main housing 221 and a core body 222. The main housing 221 and the core body 222 form the slider pad 220 by being coupled to each other. The main housing 221 may be movably coupled to the core body 222.

The main housing 221 may include an inner space to accommodate the core body 222. The main housing 221 may form an exterior of the slider pad 220. The main housing 221 may move relative to the core body 222. The main housing 221 may move in a predetermined direction (e.g., an x-axis direction of FIG. 6) with respect to the core body 222. The main housing 221 may slide in one degree of freedom with respect to the core body 222. The main housing 221 may move relative to the base frame 210 and the mounting member 230 by sliding with respect to the core body 222. The main housing 221 may slide about the reference axis a that penetrates a center of the mounting member 230. The main housing 221 may slide to return in a direction in which a central portion of the main housing 221 is aligned with the reference axis a.

The main housing 221 may include a first main housing part 2211, a second main housing part 2212, and a pairing magnet 221m.

The first main housing part 2211 may be coupled to the second main housing part 2212. The first main housing part 2211 may include a through hole through which the mounting member 230, the core body 222, or at least some of them may penetrate. The core body 222 and the mounting member 230 may be connected and fixed through the through hole. Desirably, an exterior of the first main housing part 2211 may have a circular arc shape.

The second main housing part 2212 may be coupled to the first main housing part 2211. Desirably, an exterior of the second main housing part 2212 may have a circular arc shape.

The pairing magnet 221m may be fixed to the main housing 221. The pairing magnet 221m may interact with a fixed magnet 222m to be described later by exchanging a magnetic force. The pairing magnet 221m may be mounted, directly or indirectly, on an outer circumferential surface of the second main housing part 2212. For example, a pair of pairing magnets 221m may be provided. While fixed to the main housing 221, the pairing magnet 221m may move together with the main housing 221 as the main housing 221 slides.

The core body 222 may be accommodated in the main housing 221. The core body 222 may be connected and fixed to the mounting member 230. A portion of the core body 222 may penetrate the through hole of the main housing.

The core body 222 may include a first core body part 2221, a second core body part 2222, and the fixed magnet 222m.

The first core body part 2221 may be connected, directly or indirectly, and fixed to the mounting member 230. The first core body part 2221 may include a mounting member connecting part that is formed to be connected, directly or indirectly, to the mounting member 230.

The core body 222 may include a sliding projection to slide the main housing 221. The sliding projection may include a first projection 2221r protruding from one side of the core body 222 and a second projection 2222s protruding from another side of the core body. The first projection 2221r may protrude from one side of the first core body part 2221. The second projection 2222s may protrude from one side of the second core body part 2222. First projections 2221r may be respectively formed on four edges of the one side of the first core body part 2221, and the second projection 2222s may have a rectangular shape and may be formed in a longitudinal direction on the one side of the second core body part 2222. Four second projections 2222s may be arranged in parallel in a longitudinal direction.

The sliding device may further include a sliding rail (e.g., a first sliding rail 2231 and a second sliding rail 2232) that may slide with respect to the core body 222.

The sliding rail may include the first sliding rail 2231 and the second sliding rail 2232. The first sliding rail 2231 may slide with respect to the first projection 2221r. The second sliding rail 2232 may slide with respect to the second projection 2222s. The first sliding rail 2231 may be spaced apart from the first core body part 2221 and may touch the first projection 2221r. The first sliding rail 2231 may be positioned between at least the core body 222 and the first main housing part 2211. The first sliding rail 2231 may include two rails spaced apart from each other. The two rails of the first sliding rail 2231 may respectively touch two first projections 2221r. The second sliding rail 2232 may be positioned between at least the core body 222 and the second main housing part 2212. The second sliding rail 2232 may be spaced apart from the second core body part 2222 and may touch the second projection 2222s.

The first sliding rail 2231 and the second sliding rail 2232 may distribute pressure produced between the core body 222 and the main housing 221 by a magnetic force. The first sliding rail 2231 and the second sliding rail 2232 may reduce friction between the main housing 221 and the core body 222. The first sliding rail 2231 and the second sliding rail 2232 may reduce dust and noise generated by the main housing 221 while it slides with respect to the core body 222 by reducing friction between the main housing 221 and the core body 222.

The second sliding rail 2232 may include four rails that respectively touch the four second projections 2222s. The four rails of the second sliding rail 2232 may be divided into two pairs of rails, and the rails in each pair may be connected, directly or indirectly, and fixed to each other. Pressure may be produced between the core body 222 in which the fixed magnet 222m is accommodated and the main housing 221 in which the pairing magnet 221m is accommodated due to an attraction force between the fixed magnet 222m and the pairing magnet 221m. The second sliding rail 2232 may be disposed between at least the core body 222 and the main housing 221 and may distribute the pressure produced between the core body 222 and the main housing 221 to the four rails. Thus, friction on each of the rails between the main housing 221 and the core body 222 may be reduced while the main housing 221 slides with respect to the core body 222. Therefore, the dust and noise generated on each of the rails due to the friction between the core body 222 and the main housing 221 may be significantly reduced.

The first sliding rail 2231 may slide with respect to the first projection 2221r, and at the same time, the second sliding rail 2232 may slide with respect to the second projection 2222s, and thus, the main housing 221 may slide in a predetermined direction (e.g., the x-axis direction of FIG. 3) with respect to the core body 222. The first sliding rail 2231 and the second sliding rail 2232 may move together with the main housing 221. The first sliding rail 2231 and the second sliding rail 2232 may be fixed to the main housing. The first sliding rail 2231 may be fixed to the first main housing part 2211, and the second sliding rail 2232 may be fixed to the second main housing part 2212.

The second core body part 2222 may be coupled to the first core body part 2221. The second core body part 2222 may include a roller hole through which the roller 2221r of the first core body part 2221 may penetrate. Desirably, an exterior of the second core body part 2222 may have a circular arc shape.

The fixed magnet 222m may be fixed to the core body 222. The fixed magnet 222m may interact and exchange a magnetic force with the pairing magnet 221m. Since the core body 222 is connected, directly or indirectly, and fixed to the base frame 210 and the mounting member 230, the fixed magnet 222m may also be fixed and stay still. The fixed magnet 222m may be mounted on, directly or indirectly, the second core body part 2222. A pair of fixed magnets 222m may be provided. A central portion of the pair of fixed magnets 222m may be formed to be aligned with the above-mentioned reference axis a. The pair of fixed magnets 222m may be arranged symmetrically with respect to the reference axis a. The fixed magnet 222m and the pairing magnet 221m may be identical in shape and size. The fixed magnet 222m and the pairing magnet 221m may be identical in magnitude of magnetic force. The fixed magnet 222m and the pairing magnet 221m may apply, to each other, a magnetic force in a direction to attract each other.

The mount/mounting member 230 may connect, directly or indirectly, the base frame 210 and the slider pad 220. The mounting member 230 may be fixed to the base frame 210. A portion of one end of the mounting member 230 may be inserted into the slider pad 220 through the through hole. The mounting member 230 may be connected, directly or indirectly, to the first core body part 2221. The mounting member 230 may be fixed to the first core body part 2221. Desirably, an exterior of the mounting member 230 may have a cylindrical shape. When the exterior of the mounting member 230 is cylindrical, the main housing 221 may move in one degree of freedom about a central axis of the cylindrical mounting member 230 using the central axis as the reference axis a.

Each embodiment herein may be used in combination with any other embodiment(s) described herein.

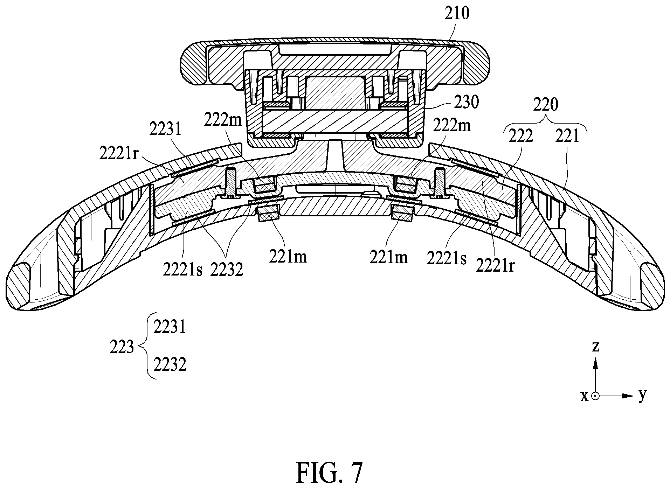

FIG. 7 is a cross-sectional view of a sliding device according to an embodiment.

Referring to FIG. 7, a sliding device 200 may include the base frame 210, the slider pad 220, and the mount/mounting member 230.

The slider pad 220 may include the main housing 221 and the core body 222. The fixed magnet 222m of the core body 222 and the pairing magnet 221m of the main housing 221 may apply, to each other, an attraction force that attracts each other. The core body 222 may include a sliding projection (e.g., the first projection 2221r and the second projection 2221s) to slide the main housing 221. The sliding projection may include the first projection 2221r protruding from one side of the core body 222 and the second projection 2222s protruding from another side of the core body. A sliding rail (e.g., the first sliding rail 2231 and the second sliding rail 2232) may be formed between the main housing 221 and the core body 222 such that the main housing 221 slides with respect to the core body 222. The sliding rail may include the first sliding rail 2231 that may touch the first projection 2221r and slide and the second sliding rail 2232 that may touch the second projection 2221s and slide. The first sliding rail 2231 and the second sliding rail 2232 may include two rails and four rails, respectively. The main housing 221 may slide in one degree of freedom in a predetermined direction (e.g., an x-axis direction of FIG. 7) with respect to the core body 222. The base frame 210, the mounting member 230, and the core body 222 may be connected, directly or indirectly, and fixed to each other. The first sliding rail 2231 and the second sliding rail 2232 may be lubricated to slide smoothly with respect to the first projection 2221r and the second projection 2221s, respectively. The first sliding rail 2231 and the second sliding rail 2232 may reduce dust and noise generated by friction produced by the main housing 221 while it slides with respect to the core body 222. The first sliding rail 2231 and the second sliding rail 2232 may distribute pressure applied between the core body 221 and the main housing 222 to each of the rails. **In** particular, the second sliding rail 2232 may distribute the pressure between the core body 221 and the main housing 222 produced by the attraction force applied between the fixed magnet 222m and the pairing magnet 221m to the four rails and thus, may reduce friction produced on each of the rails while the main housing 222 slides with respect to the core body 221. By adopting such configuration, it may be possible to significantly reduce dust and noise generated by the friction produced while the main housing 222 slides with respect to the core body 221.

Embodiments have been described above with reference to specific matters such as specific components and limited embodiments and with reference to drawings, but these are provided to facilitate overall understanding. Also, the scope is not limited to the above-described embodiments, and various modifications may be made to and variations may be derived from these embodiments by those skilled in the art to which the present disclosure pertains. Therefore, the scope is defined not by the detailed description, but by the claims and their equivalents, and it is to be construed that all variations within the scope of the claims and their equivalents are included in the disclosure.

## Claims

1. A sliding device comprising:
a base frame;
a slider pad of which at least a portion is configured to slide in a predetermined direction with respect to the base frame; and
a mount configured to connect the base frame and the slider pad,
wherein the slider pad comprises:
a core body providing a fixed magnet and connected and fixed to the mount; and
a main housing providing a pairing magnet to be attracted by the fixed magnet and configured to accommodate the core body therein, and
wherein the main housing is configured to slide with respect to at least the core body.

2. The sliding device of claim 1, wherein the core body comprises at least one roller configured to help the main housing slide.

3. The sliding device of claim 1, wherein the main housing comprises a plurality of sliding rails configured to slide with respect to the core body.

4. The sliding device of claim 3, wherein the core body comprises a sliding projection touching the sliding rails and configured to slide.

5. The sliding device of claim 4, wherein
the sliding projection comprises a first projection protruding from one side of the core body and a second projection protruding from another side of the core body, and
the sliding rails comprise a first sliding rail touching the first projection and a second sliding rail touching the second projection.

6. The sliding device of claim 5, wherein the first sliding rail comprises two rails, and the second sliding rail comprises four rails.

7. The sliding device of claim 2, wherein a pair of fixed magnets and a pair of pairing magnets are provided, and each magnet of the pair of fixed magnets and the pair of pairing magnets is arranged symmetrically with respect to a central portion of the slider pad.

8. The sliding device of claim 1, wherein the fixed magnet is configured to apply, to the pairing magnet, a magnetic force in a direction to attract the pairing magnet, and the main housing is configured to return to a predetermined alignment position with respect to the core body via a magnetic force.

9. The sliding device of claim 8, wherein a magnitude of the magnetic force with which the fixed magnet attracts the pairing magnet is maximized and/or large at the alignment position.

10. The sliding device of claim 1, wherein
the main housing comprises a through hole through which at least a portion of the core body is configured to penetrate, and
the portion of the core body is connected to the mount at least by penetrating the through hole.

11. The sliding device of claim 1, wherein the fixed magnet and the pairing magnet are identical in size and shape.

12. The sliding device of claim 1, further comprising:
a rubber pad disposed on a surface of the core body facing an inner wall of the main housing.

13. A wearable motion assisting device comprising:
an auxiliary arm, configured to be wearable around a femoral region of a user, comprising a sliding device comprising a base frame, a slider pad of which at least a portion is configured to slide in a predetermined direction with respect to the base frame and return to a predetermined position with respect to the base frame via a magnetic force, and a mount configured to connect the base frame and the slider pad;
an actuator connected to the auxiliary arm and configured to control the auxiliary arm to be driven;
a main belt configured to at least partially enclose a waist of the user; and
a main frame connected to the main belt, and wherein the actuator is supported by the main frame.

14. The motion assisting device of claim 13, wherein the slider pad is configured to return to a central portion of the femoral region of the user via the sliding device.
